Europäisches Patentamt

European Patent Office

Office européen des brevets

(19)

(11) Numéro de publication: **0 205 353**
**B1**

(12) **FASCICULE DE BREVET EUROPEEN**

(45) Date de publication du fascicule du brevet:
**27.12.89**

(51) Int. Cl.⁴: **B65F 3/08**

(21) Numéro de dépôt: **86400211.8**

(22) Date de dépôt: **31.01.86**

(54) **Appareil de chargement sélectif adaptable sur tous types de véhicules mobiles ou équipements fixes.**

(30) Priorité: **04.02.85 FR 8501483**

(43) Date de publication de la demande:
**17.12.86 Bulletin 86/51**

(45) Mention de la délivrance du brevet:
**27.12.89 Bulletin 89/52**

(84) Etats contractants désignés:
**BE DE FR GB NL**

(56) Documents cités:
**DE-C- 117 970**
**FR-A- 2 511 660**
**GB-A- 601 569**
**US-A- 2 847 135**
**US-A- 2 906 419**

(73) Titulaire: **Faucheux, Rémy, 754, Rue de la Montjoie Saran, F-45400 Fleury Les Aubrais(FR)**

(72) Inventeur: **Faucheux, Rémy, 754, Rue de la Montjoie Saran, F-45400 Fleury Les Aubrais(FR)**

(74) Mandataire: **Langlois, Robert, 2, rue Giffard, F-75013 Paris(FR)**

## Description

La présente invention concerne un dispositif de chargement sélectif adaptable sur tous types de véhicules mobiles ou d'équipements fixes. Ce dispositif permet de prendre au sol les containers ou bacs pleins, toujours en position horizontale, pendant leurs montées et leurs translations longitudinales au-dessus du véhicule; ces containers seront déversés par l'utilisateur, éventuellement à distance, à l'emplacement choisi dans la benne.

On connaît déjà des dispositifs de chargement analogues.

Le brevet français 2 511 660 (Faucheux) décrit un dispositif de chargement dans lequel un ou deux containers sont repris par un chargeur pour être déversés au moyen de dispositifs de basculement mécanique.

Toutefois, ces dispositifs de basculement mécaniques ne sont pas entièrement satisfaisants. En effet, le basculement des containers est effectué en des points fixes de la benne, au moyen de butées de basculement ce qui implique des chocs ou des bruits indésirables et nécessite un entretien suivi de la part de l'utilisateur.

La présente invention définie par la revendication 1 a pour but de pallier les inconvénients précités et de fournir un dispositif de basculement des containers, non plus en des points fixes de la benne, mais en des points choisis à volonté par l'utilisateur, ce qui permet de mieux répartir le chargement dans la benne.

Un autre but de la présente invention est de fournir un dispositi de basculement par voie hydraulique, pneumatique ou électrique, permettant de supprimer les chocs et les bruits, pouvant être commandé automatiquement à distance, assurant le basculement simultané ou séparé des containers, ce qui confère une grande souplesse d'utilisation et assure une sécurité accrue à l'utilisateur.

Le dispositif de basculement conforme à la présente invention comporte des vérins hydrauliques, pneumatiques ou électriques prévus sur le chargeur des containers.

Conformément à la présente invention, l'alimentation des vérins de basculement est assurée par des conduits flexibles hydrauliques, pneumatiques ou électriques raccordés aux vérins correspondants et enroulés sur un enrouleur.

Selon une autre caractéristique de l'invention, les containers groupés par deux peuvent être déchargés ensemble dans le même compartiment.

Selon une autre caractéristique de l'invention, les containers groupés par deux peuvent être déchargés séparément dans des compartiments différents sélectionnés.

Cette benne (1) est divisée en cloisons transversales mobiles selon le matériau ou la matière à déverser.

Une chaine ou câble sans fin circulera parallélement et longitudinalement sur des pignons (5) entrainant le ou les bacs jusqu'à l'endroit désiré pour décharger le contenu d'un ou de deux bacs (3) (4) à la fois; après quoi, les bacs vides sont remis automatiquement en position horizontale pour retour au sol et ainsi de suite. (en A.)

La manoeuvre de déchargement s'effectuera par un moyen hydraulique, pneumatique, électrique ou autres, situé à l'avant de la benne avec toute sécurité nécessaire. Les services hydrauliques seront munis de flexibles qui suivront les bacs dans leur déplacement.

La préhension des récipients, containers, bacs ou autres s'effectuera par un moyen réglable automatiquement. Cette préhension permet de prendre un ou deux bacs ensemble, ceux-ci se trouvant placés, l'un à côté de l'autre, et de les vider chacun selon leur contenu dans les compartiments sélectionnés, à cet effet.

Lorsque la mécanique est en mouvement, la sécurité est assurée par des valves appropriées. Plusieurs combinaisons peuvent-être adaptées, quant au déversement: un ou deux bacs peuvent être déversés ensembles ou séparément, ceux-ci étant placés sur le même bâti. Une bâche ou une couverture isotherme pourra être aménagée au-dessus de la benne.

Ce dispositif permet, également, la possibilité à tous matériels ou véhicules existants d'être transformés, sans réduction du volume intérieur de la benne.

Les dessins représentés et décrits ne sont donnés ici qu'à titre schématique, indicatif non limitatif et sont sujets à de nombreuses variantes de réalisations et d'applications, comme produit Industriel nouveau.

La FIG- 1 - représente schématiquement vue de côté, une benne (1) montrant en (2) le gousset support du container (4). En (3), le deuxiéme container est en position de versement, celui-ci bascule grâce à un vérin à tige ou rotatif (8) hydraulique, pneumatique, électrique, mécanique ou autre, commandé par l'utilisateur En (7), le rail dans lequel roulent et avancent les galets (6) de guidage. En (5), les pignons ou poulies sur lesquelles passe une chaine ou câble sans fin, représenté en pointillés (9), entrainant les containers vers les dessus de la benne et les ramenant au sol aprés leur déversement et mise en position horizontale En -A- est représenté un bac arrivant ou pris au sol.

Les deux chaines ou câbles sans fin (9) sont identiques et tournent en même temps de chaque côté de la benne, à l'arrière et au sommet intérieur longitudinal de la benne.

La FIG- 2 - représente une benne, vue de l'arrière en perspective, montrant le chargeur sans les containers avec une partie en position de versement et l'autre dans sa position de départ montrant en (7), le rail de guidage dans sa partie verticale et horizontale. En (16), la crosse permettant le passage des bacs à l'horizontal .En (8), un vérin de versement au repos, tandis qu'en (8') le vérin est en cours de versement. En (9), la chaine sans fin de transmission. En (18), le distributeur de commande de l'appareillage mobile. En (17), les bras ou fourches de préhension des containers. En (11), la poutre de chargement. En (13) les vérins de préhension.

La FIG - 3 - représente une demie vue arrière du chargeur mobile montrant le vérin de préhension (13), les rails (7), à l'intérieur desquels tournent les galets (6) entrainés par les chaines ou câbles (9) En (11), la poutre de chargement. En (21), les glissières de guidage de préhension de chargement. En (8), vérin de préhension. En (2), le gousset support de chargement. En (20), le galet d'appui extérieur sur rail pour la montée verticale et la translation. En (22), l'arbre de rotation pour le basculement des containers. En (10), le chariot portant les galets (6) de guidage. En (23), l'arbr de rotation permettant le maintien horizontal des containers.

La FIG- 4 - représente une demie-vue arrière du chargeur sans son système de préhension laissant apparaître en (2) le gousset, support de chargement. En (7), le rail, En (6), les galets de roulement du chariot, entrainés par les chaines ou câbles (9). En (23), l'arbre de rotation permettant le maintien en position horizontale des containers. En (22), l'arbre de basculement des containers. En (10), le chariot portant les galets (6) de guidage.

La FIG- 5 - représente la partie droite arrière de la benne (1) laissant apparaitre en (12), l'enrouleur des tuyaux flexibles hydrauliques ou électriques, et le rail vertical contenant la chaine (9) représentée en pointillés En (16), la crosse arrière permettant le passage des bacs à l'horizontale (FIG-2 et 5) En (14) le support chargeur en position route. En (15), la porte arrière de la benne.

Il faut signaler que ce dispositif de chargement sélectif peut également être réalisé sur matériel ou véhicule isotherme.

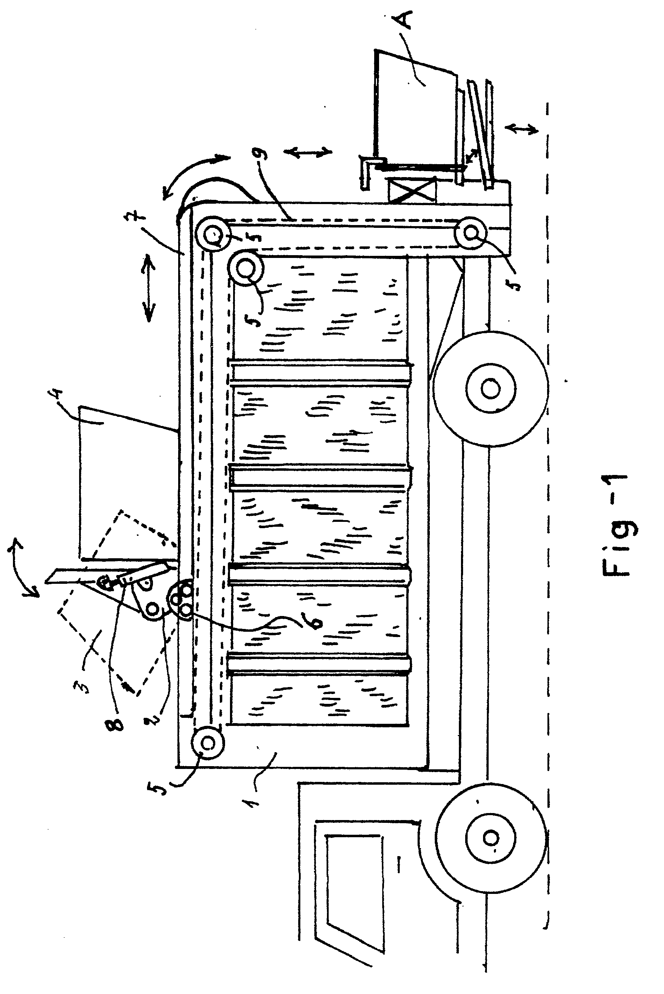

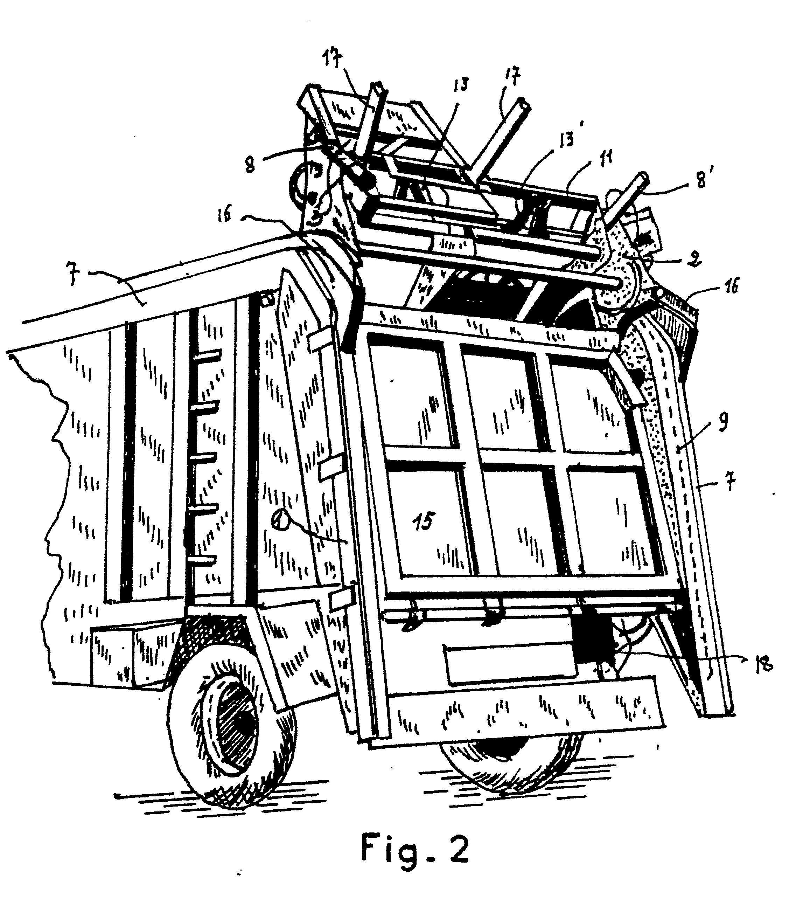

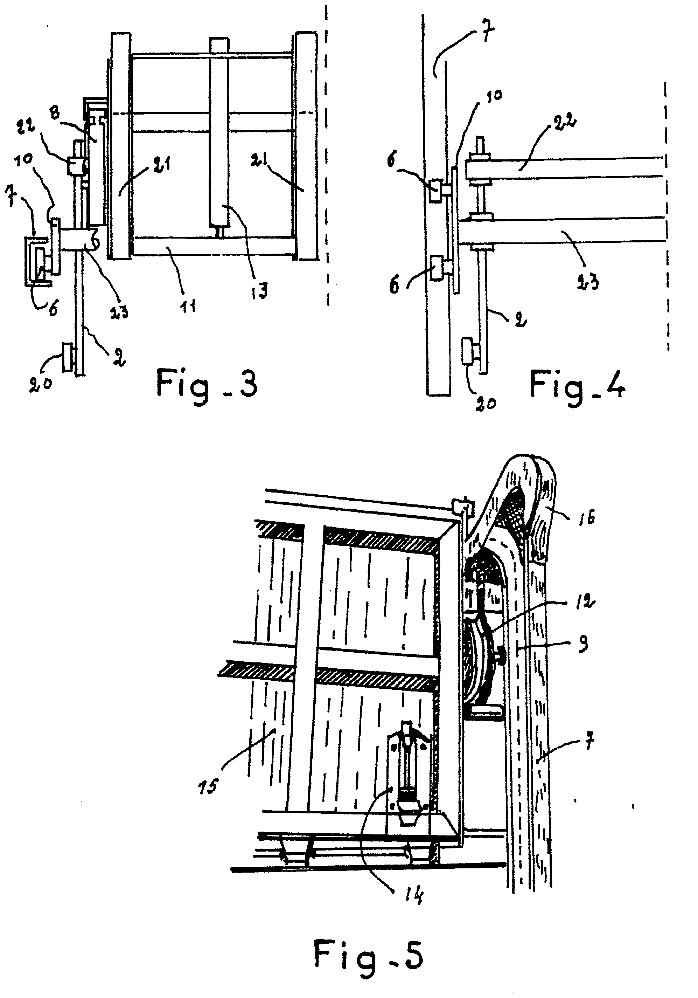

**Revendications**

1. Dispositif de chargement adaptable sur véhicules automobiles ou équipements fixes, comprenant une benne (1) équipée de bras ou fourches (17) permettant de prendre au sol des containers (3, 4) pleins et de les amener en position horizontale, d'assurer leur monté, leur translation longitudinale et leur descente à l'arrière et au dessus de la benne dans ladite position horizontale, ces containers étant entraînés grâce à un cable ou une chaîne sans fin (9), portant un chargeur (11) supportant les bras ou fourches et guidé par un rail (7), caractérisé par un ensemble de basculement des containers (3, 4) commandé par deux vérins (8, 8') et disposé sur le chargeur (11), les containers (3, 4) étant groupés par deux côte à côte sur le chargeur et pouvant être déchargés, soit ensemble, soit séparément en des points quelconques de la benne (1) sélectionnés par l'utilisateur sous l'action de l'un ou l'autre.

2. Dispositif de chargement suivant la revendication 1, caractérisé en ce que les vérins (8, 8') sont des vérins hydrauliques.

3. Dispositif de chargement suivant la revendication 1, caractérisé en ce que les vérins (8, 8') sont des vérins pneumatiques.

4. Dispositif de chargement suivant la revendication 1, caractérisé en ce que les vérins (8, 8') sont des vérins électriques.

5. Dispositif de chargement suivant l'une quelconque des revendications 1 à 4, caractérisé en ce que l'ensemble de basculement des containers (3, 4) peut être commandé automatiquement à distance au moyen d'une commande (18).

6. Dispositif de chargement suivant l'une quelconque des revendications 1 à 5, caractérisé en ce que l'alimentation des vérins de basculement (8, 8') est assurée au moyen de conduits flexibles hydrauliques, pneumatiques ou électriques raccordés aux vérins correspondants et enroulés sur un enrouleur (12).

**Claims**

1. Loading device adaptable to motor vehicles or to stationary appliances, comprising a skip (1) equipped with arms or forks (17), making it possible to pick up full containers (3, 4) from the ground and bring them into a horizontal position and to ensure their rising, their longitudinal translational motion and their lowering at the rear of and above the skip in the said horizontal position, these containers being driven by means of a cable or an endless chain (9) carrying a loader (11) supporting the arms or forks and guided by a rail (7), characterised by an assembly for tilting the containers (3, 4) which is controlled by two jacks (8, 8') and is arranged on the loader (11), the containers (3, 4) being grouped in twos side by side on the loader and being dischargeable either together or separately at any points of the skip (1) which are selected by the user, under the action of either one or both of the two jacks.

2. Loading device according to Claim 1, characterised in that the jacks (8, 8') are hydraulic jacks.

3. Loading device according to Claim 1, characterised in that the jacks (8, 8') are pneumatic jacks.

4. Loading device according to Claim 1 characterised in that the jacks (8, 8') are electrical jacks.

5. Loading device according to any one of Claims 1 to 4, characterised in that the assembly for tilting the containers (3, 4) can be automatically controlled remotely by means of a control (18).

6. Loading device according to any one of Claims 1 to 5, characterised in that the tilting jacks (8, 8') are fed by means of flexible hydraulic, pneumatic or electrical pipes connected to the corresponding jacks and wound onto a winder (12).

**Patentansprüche**

1. Beschickungsvorrichtung, die für Fahrzeuge mit eigenem Antrieb oder stationären Anlagen verwendbar ist, und die einen Kasten (1) aufweist, der mit Armen oder Gabeln (17) ausgestattet ist, die es gestatten, am Boden volle Behälter (3, 4) aufzunehmen und sie in eine horizontale Position zu bringen, um ihre Aufwärtsbewegung, ihre Längsverschiebung und ihre Abwärtsbewegung an der Heckseite und oberhalb des Kastens in der erwähnten horizontalen Position zu gewährleisten, wobei die Behälter mittels eines endlosen Seils oder einer endlosen Kette (9) angetrieben werden, die eine Ladevorrichtung (11) trägt, die die Arme oder Gabeln trägt und die mittels einer Schiene (7) geführt wird, gekennzeichnet durch eine Schwenkvorrichtung für die Behälter (3, 4), die durch zwei Hubzylinder (8, 8') gesteuert wird und auf der Ladevorrichtung (11) angeordnet ist, wobei die Behälter (3, 4) paarweise Seite an Seite auf der Ladevorrichtung angeordnet sind und entweder als Einheit oder getrennt an beliebigen vom Benutzer ausgewählten Punkten unter Einwirkung des einen oder des anderen oder beider Hubzylinder entleert werden können.

2. Beschickungsvorrichtung nach Anspruch 1, dadurch gekennzeichnet, daß die Hubzylinder (8, 8') Hydraulik-Zylinder sind.

3. Beschickungsvorrichtung nach Anspruch 1, dadurch gekennzeichnet, daß die Hubzylinder (8, 8') Pneumatik-Zylinder sind.

4. Beschickungsvorrichtung nach Anspruch 1, dadurch gekennzeichnet, daß die Hubzylinder (8, 8') elektrische Hubzylinder sind.

5. Beschickungsvorrichtung nach irgendeinem der Ansprüche 1 bis 4, dadurch gekennzeichnet, daß die Schwenkvorrichtung der Behälter (3, 4) selbsttätig mittels einer Steuereinrichtung (18) gesteuert werden kann.

6. Beschickungsvorrichtung nach irgendeinem der Ansprüche 1 bis 5, dadurch gekennzeichnet, daß die Speisung der Hubzylinder (8, 8') für die Schwenkbewegung mittels biegsamer Hydraulik-Leitungen, Pneumatik-Leitungen oder elektrischer Leitungen gewährleistet wird, die mit den entsprechenden Hubzylindern verbunden und auf einer Wickelvorrichtung (12) aufgewickelt sind.

Fig-1

Fig. 2

Fig.-3

Fig.-4

Fig.-5